# FASCICULE DE BREVET EUROPEEN

(11) **EP 3 219 521 B1**
(45) Date de publication et mention de la délivrance du brevet: **06.02.2019**
(21) Numéro de dépôt: 17160855.7
(22) Date de dépôt: 14.03.2017
(51) Int. Cl.: F16C 33/72, F16C 19/16, B60G 15/06

(54) **BUTEE DE SUSPENSION A COUPELLE MONOBLOC A MOULAGE AXIAL**
ANSCHLAGPUFFER MIT AXIAL GEPRESSTER MONOBLOCKSCHALE
BUMP STOP WITH AXIALLY MOULDED INTEGRAL CUP

(30) Priorité: 18.03.2016 FR 1652339
(43) Date de publication de la demande: 20.09.2017
(73) Titulaire: NTN-SNR Roulements, 74010 Annecy (FR)
(72) Inventeur: DELARCHE, Sébastien, 74320 SEVRIER (FR); PETERSCHMITT, Cyril, 74330 LA BALME DE SILLINGY (FR)
(74) Mandataire: Alatis

(56) Documents cités:
- WO-A1-2015/014760
- FR-A1- 2 863 944
- FR-A1- 2 915 929
- FR-A1- 2 921 016

## Description

### DOMAINE TECHNIQUE DE L'INVENTION

L'invention se rapporte à une butée de suspension pour une jambe de force comportant un ressort à boudin. L'invention se rapporte également à une jambe de suspension comportant une telle butée.

### ÉTAT DE LA TECHNIQUE ANTÉRIEURE

Dans le document WO 2015/014760 est décrite une butée de suspension pour une jambe de suspension comportant un amortisseur télescopique et un ressort à boudin, la butée de suspension définissant un axe géométrique de référence et comportant: un palier comportant au moins une rondelle supérieure et une rondelle inférieure tournant l'une par rapport à l'autre; un couvercle monobloc en matière plastique moulée, présentant une face inférieure comportant une zone de contact avec la rondelle supérieure, le couvercle présentant au moins une zone d'encliquetage; et une coupelle monobloc inférieure en matière moulée présentant une face supérieure comportant une zone de contact avec la rondelle inférieure et une face inférieure comportant une zone annulaire périphérique d'appui pour l'extrémité supérieure du ressort à boudin, la coupelle comportant des crochets faisant saillie radialement vers la zone d'encliquetage du couvercle, de sorte à venir s'encliqueter sur la zone d'encliquetage du couvercle, la coupelle présentant des lumières en alignement axial avec les crochets de manière à ce que la coupelle ne comporte aucune partie en recouvrement radial avec les crochets. Les lumières, qui n'ont pas de fonction dans la butée en fonctionnement, sont la trace du mode de fabrication de la coupelle monobloc par moulage dans un moule dont les pièces sont mobiles les unes par rapport aux autres en translation parallèlement à l'axe de référence. En d'autres termes, les formes sont choisies de façon à éviter un moule à tiroirs latéraux, afin d'augmenter les cadences de fabrication et de limiter la complexité et les coûts. Mais la présence de lumières est susceptible de fragiliser la coupelle monobloc, et de favoriser des concentrations de contraintes et des amorces de rupture en charge. Par ailleurs, les lumières peuvent constituer un chemin d'entrée de polluants vers la tige d'amortisseur.

### EXPOSÉ DE L'INVENTION

L'invention vise à remédier aux inconvénients de l'état de la technique et à proposer une butée de suspension tournante facile à fabriquer, et formant un sous-ensemble cohérent avant montage sur le véhicule, et qui ne présente pas de zone de fragilisation.

Pour ce faire est proposée, suivant un premier aspect de l'invention, une butée de suspension, pour une jambe de suspension comportant un ressort à boudin, la butée de suspension définissant un axe géométrique de référence et comportant:
- un palier;
- un couvercle, présentant une face inférieure comportant une zone de contact avec le palier, le couvercle présentant au moins une zone d'encliquetage;
- une coupelle monobloc inférieure en matière plastique ou composite moulée, présentant une face supérieure délimitant avec la face inférieure du couvercle un logement pour le palier, et une face inférieure comportant une zone annulaire périphérique d'appui pour une extrémité supérieure du ressort à boudin, la zone annulaire périphérique d'appui étant située radialement à l'extérieur de la zone d'encliquetage; et
- une couronne d'assemblage solidaire de la coupelle monobloc et comportant au moins une zone complémentaire d'encliquetage faisant saillie radialement vers la zone d'encliquetage du couvercle, de sorte à venir s'encliqueter sur la zone d'encliquetage du couvercle.

En prévoyant une zone complémentaire d'encliquetage sur une pièce dédiée, à savoir la couronne d'assemblage, on simplifie le moulage de la coupelle monobloc inférieure, qui peut le cas échéant être réalisée par moulage dans un moule dont les pièces sont mobiles les unes par rapport aux autres en translation par rapport à l'axe de référence.

La coupelle monobloc, réalisée de préférence en matière moulable, notamment en matière plastique ou en un matériau composite avec ou sans insert métallique, constitue à elle seule l'interface avec le ressort à boudin.

De préférence, la zone d'encliquetage est annulaire. De façon similaire, la zone complémentaire d'encliquetage est annulaire. La zone d'encliquetage peut ainsi, avec la zone complémentaire d'encliquetage, constituer une étanchéité ou une perte de charge entre le palier et l'extérieur. Suivant un mode particulièrement avantageux, on fait en sorte que dans une position nominale de fonctionnement, la zone d'encliquetage soit sans contact avec la zone complémentaire d'encliquetage, un chicanage étant réalisé entre la zone d'encliquetage et la zone complémentaire d'encliquetage. On obtient ainsi une protection du palier contre les polluants, sans engendrer de couple de frottement notable. Alternativement, on peut envisager un contact entre la zone d'encliquetage et la zone complémentaire d'encliquetage en position nominale assemblée pour renforcer l'étanchéité.

Suivant un mode de réalisation, le couvercle comporte un joint d'étanchéité annulaire en contact glissant avec une portée annulaire, de préférence cylindrique ou tronconique, formée sur la couronne d'assemblage, de préférence sous la zone complémentaire d'encliquetage.

Le couvercle peut être monobloc. Alternativement, pour adapter chaque partie du couvercle à sa fonction, on peut prévoir qu'il soit constitué d'une première portion en une première matière constituant la zone de contact avec le palier et d'une deuxième portion annulaire en une deuxième matière différant de la première matière, formant la zone d'encliquetage et/ou le joint d'étanchéité, si un tel joint est prévu.

La couronne d'assemblage peut être solidarisée à la coupelle monobloc par différents moyens. Selon un mode de réalisation, la couronne d'assemblage comporte une base surmoulée dans la matière plastique moulée de la coupelle monobloc inférieure. Alternativement, la couronne d'assemblage comporte au moins une zone d'accrochage inférieure élastiquement déformable encliquetée dans au moins une zone d'accrochage complémentaire de la coupelle inférieure. Un tel assemblage par encliquetage élastique, de préférence non réversible, s'avère suffisant pour assurer la cohésion des pièces avant leur assemblage sur le véhicule.

De préférence, la coupelle inférieure comporte une zone de contact avec le palier, présentant de préférence des nervures. Une partie au moins de la charge axiale sur la butée peut ainsi suivre un chemin passant sans intermédiaire du palier à la coupelle monobloc, et de celle-ci au ressort à boudin. Suivant un mode de réalisation, la couronne d'assemblage n'est pas en contact avec le palier, auquel cas toute la charge axiale passe sans intermédiaire du palier à la coupelle monobloc.

Alternativement, on peut également prévoir que le palier repose au moins partiellement sur la couronne d'assemblage, de sorte qu'une partie au moins de la charge passe par la couronne d'assemblage.

De préférence, la face supérieure de la coupelle monobloc comporte des nervures de renfort situées radialement à l'extérieur de la zone de contact. Ces nervures sont destinées à assurer une rigidité en flexion à la coupelle, tout en limitant sa masse. De préférence, certaines au moins des nervures sont radiales. Les nervures permettent de transférer radialement les efforts entre le palier et le ressort à boudin, tout en limitant le niveau de contraintes dans la coupelle. Suivant un mode de réalisation, certaines au moins des nervures délimitent des alvéoles polygonales. On gère ainsi plusieurs modes de déformation.

La zone de contact peut également comporter des nervures sur lesquelles repose le palier.

Suivant un mode de réalisation, la face inférieure de la coupelle monobloc comporte: un épaulement annulaire plan extérieur et une portée annulaire au moins partiellement cylindrique tournée radialement vers l'extérieur délimitant avec l'épaulement extérieur la zone annulaire périphérique d'appui pour l'extrémité supérieure du ressort à boudin.

Suivant un mode de réalisation particulièrement avantageux, la face inférieure de la coupelle monobloc comporte une zone de logement d'une extrémité supérieure d'un tampon de choc, délimitée par un épaulement annulaire plan intérieur et par une face de confinement au moins partiellement cylindrique tournée radialement vers l'intérieur. De préférence, la coupelle monobloc présente une cloison formant un pli annulaire constituant la face de confinement et la portée annulaire, la face de confinement étant située radialement à l'intérieur de la portée annulaire. La structure de la coupelle monobloc est alors particulièrement rigide, tout en restant simple à mouler, car constituée de parois d'épaisseur uniforme. De préférence, la face supérieure de la coupelle monobloc comporte des nervures de renfort dont certaines au moins s'étendent à l'intérieur du pli annulaire de la cloison.

De préférence, le palier est situé radialement à l'intérieur de la zone d'encliquetage.

Suivant un mode de réalisation, la zone complémentaire d'encliquetage fait saillie radialement vers l'extérieur et la zone d'encliquetage fait saillie radialement vers l'intérieur. Alternativement, la zone complémentaire d'encliquetage fait saillie radialement vers l'intérieur et la zone d'encliquetage fait saillie radialement vers l'extérieur.

Suivant un mode de réalisation, le palier comporte au moins une rondelle supérieure et une rondelle inférieure tournant l'une par rapport à l'autre.

Suivant un mode de réalisation, la rondelle inférieure a un diamètre inférieur à un diamètre intérieur de la zone annulaire périphérique d'appui de l'extrémité supérieure du ressort à boudin.

Suivant un mode de réalisation, le palier est un palier à roulement, comportant des corps roulants en contact avec des chemins de roulement formés sur les rondelles supérieure et inférieure. Alternativement, le palier peut être un palier lisse, comportant une ou plusieurs rondelles de frictions interposées entre le couvercle et la coupelle monobloc. Les rondelles sont de préférence métalliques, bien que d'autres matériaux puissent être envisagés, notamment dans le cas d'un palier lisse. La rondelle inférieure peut être réalisée par emboutissage. La rondelle supérieure peut être massive ou réalisée par emboutissage.

L'invention est particulièrement adaptée à une butée de suspension dont la rondelle supérieure forme une portée annulaire plane d'appui pour un amortisseur télescopique de la jambe de suspension, la portée annulaire plane d'appui s'étendant radialement vers l'intérieur par rapport à la rondelle inférieure.

Suivant un autre aspect de l'invention, celle-ci a trait à une jambe de suspension comportant un ressort à boudin, et une butée de suspension telle que décrite précédemment, le ressort à boudin présentant une extrémité supérieure en appui contre la zone d'appui.

Suivant un mode de réalisation, la jambe de suspension comporte en outre un tampon de choc présentant une extrémité supérieure logée dans une zone de logement formée par un épaulement annulaire plan ou tronconique et par une face de confinement de la coupelle.

Suivant un mode de réalisation, la jambe de suspension comportant en outre un amortisseur télescopique traversant la butée de suspension et en appui contre la portée annulaire d'appui formée par la rondelle supérieure.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une jambe de suspension et d'une butée de suspension suivant un premier mode de réalisation de l'invention;
- la figure 2, une vue éclatée d'une coupelle et d'une couronne d'assemblage de la butée de la figure 1;
- la figure 3, une vue en coupe d'une butée de suspension suivant un autre mode de réalisation de l'invention;
- la figure 4, une vue isométrique d'une couronne d'assemblage de la butée de la figure 3;
- la figure 5 un détail d'un plot de la couronne d'assemblage de la figure 4;
- la figure 6, une vue en coupe d'une butée de suspension suivant une variante de réalisation;
- la figure 7, une vue en coupe d'une butée de suspension suivant un autre mode de réalisation de l'invention ;
- la figure 8, un détail d'une butée de suspension suivant un autre mode de réalisation de l'invention ;
- la figure 9, un détail d'une butée de suspension suivant un autre mode de réalisation de l'invention ;
- la figure 10 une vue en perspective d'un couvercle de la butée de suspension de la figure 9.

Pour plus de clarté, les éléments identiques sont repérés par des signes de référence identiques sur l'ensemble des figures.

### DESCRIPTION DÉTAILLÉE DE MODES DE RÉALISATION

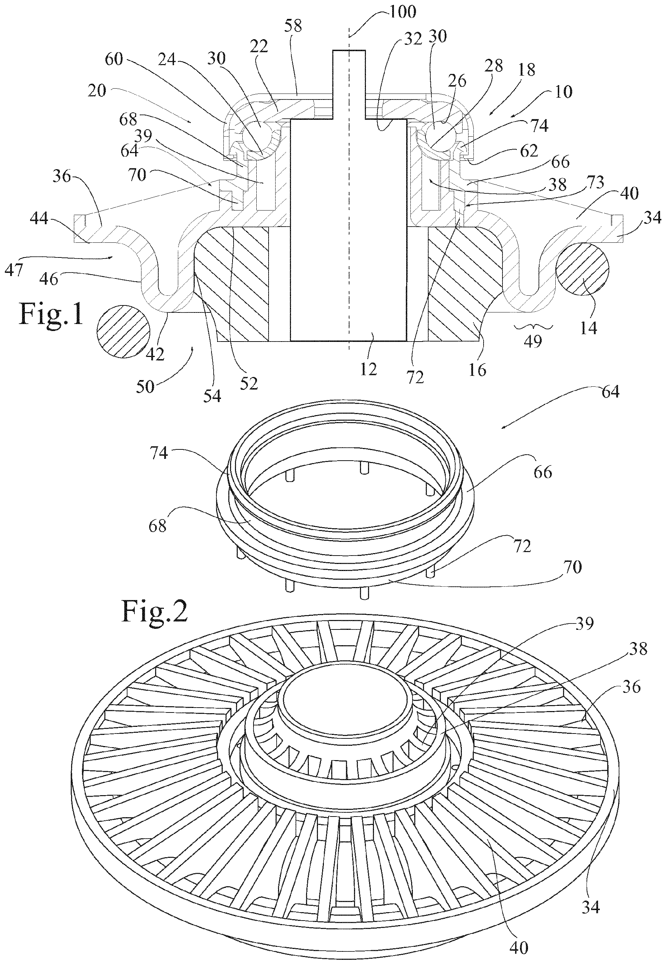

En référence à la figure **1**, une jambe de suspension **10** est composée, dans sa partie supérieure, d'un amortisseur télescopique dont seule une tige d'extrémité **12** a été illustrée, d'un ressort à boudin **14**, d'un tampon de choc **16** et d'une butée de suspension tournante **18** assurant l'interface entre les éléments précédents et la caisse du véhicule (non représentée).

La rotation de la butée **18** autour d'un axe **100** est assurée par un palier **20** à roulement comportant une rondelle supérieure métallique **22** massive et une rondelle inférieure métallique **24** de préférence réalisée par emboutissage d'une tôle, et définissant des chemins de roulement **26**, **28** sur lesquels roulent des corps roulants **30**, en l'espèce des billes. La rondelle supérieure **22** forme une portée annulaire plane d'appui **32** pour la tige de l'amortisseur télescopique **12**, s'étendant radialement vers l'intérieur par rapport aux chemins de roulement **26**, **28.**

L'interface entre d'une part le palier **20** et d'autre part le corps (non illustré) de l'amortisseur télescopique, le ressort à boudin **14** et le tampon de choc **16** est assurée par une coupelle d'appui monobloc **34** moulée en matière plastique ou composite.

Cette coupelle présente sur sa face supérieure **36** une zone de contact **38** avec la rondelle inférieure **24** du palier **20**, composée de nervures **39**, la rondelle inférieure **24** étant en appui sur les arêtes des nervures **39**. Les nervures **39** peuvent être radiales comme illustré sur les figures **1** et **2** ou circulaires et concentriques. La face supérieure **36** de la coupelle **34** comporte en outre des nervures de renfort **40** situées radialement à l'extérieur de la zone de contact **38**, s'étendant depuis cette dernière jusqu'à la périphérie extérieure de la coupelle **34**.

La face inférieure **42** de la coupelle **34** présente à sa périphérie un épaulement annulaire plan extérieur **44** et une portée annulaire au moins partiellement cylindrique **46** tournée radialement vers l'extérieur délimitant avec l'épaulement extérieur **44** une zone annulaire périphérique d'appui **47** pour l'extrémité supérieure du ressort à boudin.

La coupelle **34** présente une cloison formant un pli annulaire 49 qui constitue la portée annulaire **46** et entoure extérieurement une zone de logement **50** d'une extrémité supérieure du tampon de choc **16** formée par un épaulement annulaire plan ou tronconique **52** et par une face de confinement **54** de préférence au moins partiellement cylindrique ou très légèrement conique tournée radialement vers l'intérieur. La face de confinement **54** de la zone de logement **50** de l'extrémité supérieure du tampon de choc **16** est située radialement à l'intérieur de la portée annulaire **46** de la zone d'appui de l'extrémité supérieure du ressort **14.** La rondelle inférieure **24** a un diamètre inférieur au diamètre de la portée cylindrique **46** et de préférence inférieur au diamètre de la face de confinement **54.**

Un couvercle monobloc **58** de protection du palier **20** vient en appui sur la rondelle supérieure **22** du palier **20** et délimite avec la coupelle **34** un logement **59** pour le palier **20.** Le couvercle monobloc **58** forme une jupe périphérique **60** présentant une zone d'encliquetage **62** constituée ici par un bourrelet annulaire faisant saillie radialement vers l'intérieur.

La butée de suspension tournante **18** comporte en outre une couronne d'assemblage **64** solidaire de la coupelle monobloc **34**, comportant une collerette **66** destinée à venir en appui axial sur la face supérieure **36** de la coupelle **34**, un manchon **68** faisant saillie axialement depuis la collerette **66** vers le palier **20**, et une jupe **70** s'étendant axialement depuis la collerette **66** vers la coupelle monobloc **34**, cette jupe **70** étant prolongée par des plots individuels **72** répartis à sa circonférence. Comme illustré sur la figure **1**, ces plots **72** affleurent sur la face inférieure **42** de la coupelle **34**, au niveau de l'épaulement **52**.

La jupe **70** et les plots **72** constituent ainsi une base **73** de la couronne d'assemblage **64**, surmoulée dans la coupelle monobloc **34**. L'extrémité supérieure du manchon **68** forme une collerette annulaire **74** à profil en forme de crochet qui fait saillie radialement vers la jupe périphérique **60** du couvercle et constitue une zone d'encliquetage périphérique complémentaire.

La zone d'encliquetage **62** de la jupe périphérique **60** et la zone d'encliquetage complémentaire **74** de la couronne d'assemblage **64** permettent de constituer un sous-ensemble cohérent préassemblé entre le palier **20** et la coupelle **34** avant le montage sur le véhicule. Après montage sur le véhicule, la zone d'encliquetage **62** de la jupe périphérique **60** et la zone d'encliquetage complémentaire **74** ne sont plus en contact, sauf le cas échéant en cas de sollicitations importantes sur la butée entraînant une déformation des pièces. En position nominale, elles délimitent un passage en chicane annulaire, qui protège l'intérieur du palier **20** des intrusions extérieures.

Cette configuration permet une fabrication en deux étapes: la couronne d'assemblage **64** est tout d'abord fabriquée en matière plastique ou composite dans un premier moule, puis cette pièce est insérée dans un deuxième moule d'injection de la matière plastique ou composite constitutive de la coupelle monobloc **34**, les plots **72** étant dans cette phase en contact avec les parois du moule et permettant un positionnement maîtrisé de la couronne d'assemblage **64** dans le deuxième moule.

Le moulage par injection de la couronne d'assemblage **64** peut être fait dans un moule en trois pièces, l'une réalisant une cavité annulaire pour la collerette **66**, la jupe **70** et les plots individuels **72**, les deux autres, mobiles radialement par rapport à la première, réalisant la cavité pour le manchon **68** et la zone d'encliquetage complémentaire **74**. Alternativement, on peut envisager un moulage dans un moule en deux pièces se déplaçant en translation l'une par rapport à l'autre dans une direction perpendiculaire à l'axe de référence **100.**

Le cas échéant, les deux étapes de fabrication de la couronne d'assemblage puis de fabrication de la coupelle monobloc peuvent être effectuées dans un même outillage de moulage comportant une première empreinte pour mouler la couronne d'assemblage **64** à partir d'un premier circuit d'injection, et une deuxième empreinte pour mouler la coupelle monobloc **34** autour de la couronne d'assemblage **64** à partir d'un deuxième circuit d'injection. Le déplacement de la couronne d'assemblage **64** de la première à la deuxième empreinte est alors effectué par un robot.

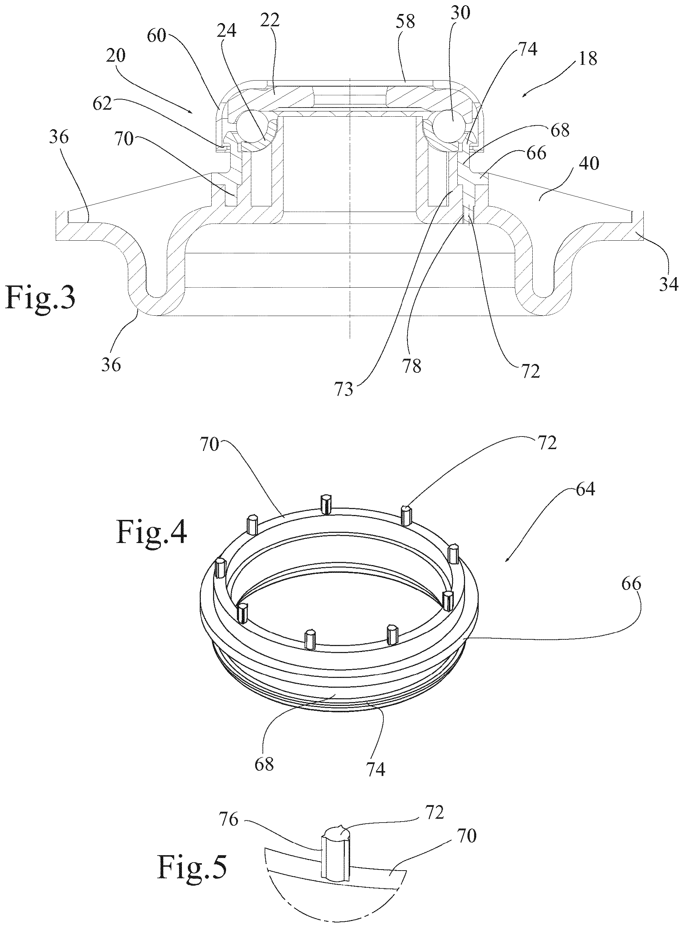

La butée tournante de suspension des figures **3** à **5** est très similaire à celles des figures **1** et **2**, mais en diffère par le mode de réalisation de la liaison entre la coupelle monobloc **34** et la couronne d'assemblage **64**, ces deux pièces étant fabriquées séparément et assemblées l'une à l'autre mécaniquement. Pour obtenir une solidarisation suffisante, les plots **72** sont pourvus de nervures **76** qui viennent s'insérer par brochage dans des trous **78** prévus à cet effet dans la coupelle d'appui monobloc.

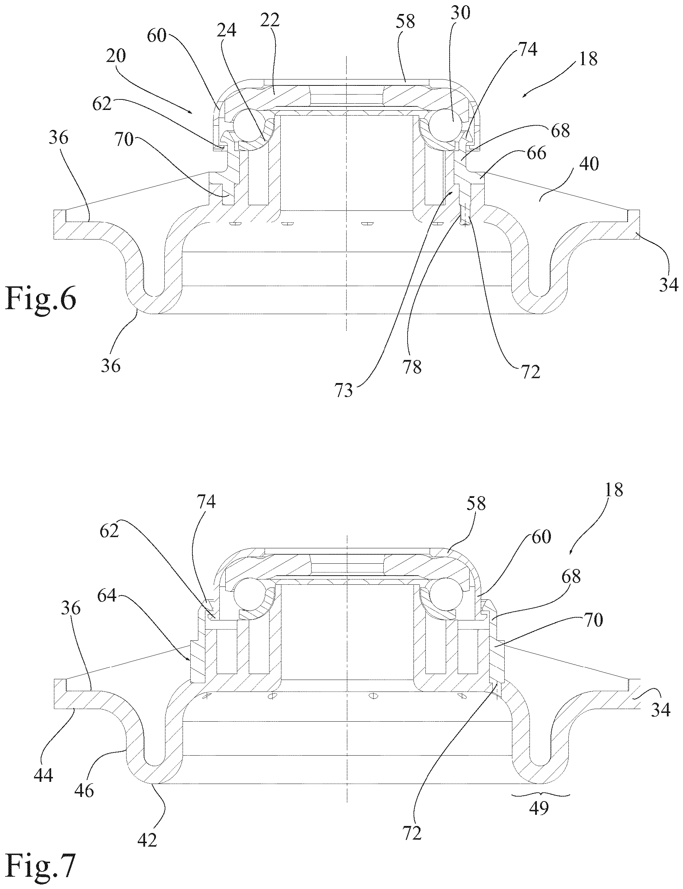

En variante, et comme illustré sur la figure **6**, on peut prévoir que les plots **72** présentent une tête **80** en saillie par rapport à la face inférieure de la coupelle monobloc **34**, et que l'on vient déformer à chaud pour former un rivetage. Ce mode de fixation peut venir compléter des plots **72** à nervures **76**, mais est également compatible avec des plots cylindriques.

Suivant une autre variante, la tête saillante **80** des plots **72** est élastiquement déformable, de manière à s'effacer lors de l'insertion des plots **72** dans les trous **78**, et à reprendre une position d'accrochage radialement saillante et en appui contre la face inférieure **42** de la coupelle **34** à l'issue de l'insertion.

On peut également prévoir que la zone d'encliquetage **62** du couvercle **58** soit tournée radialement vers l'extérieur et la zone d'encliquetage complémentaire **74** de la couronne **64** soit tournée radialement vers l'intérieur, pour réaliser des formes plus favorable à un moulage axial de la couronne **64** et du couvercle **58**, sans contre-dépouilles, comme illustré sur la figure **7**. La forme générale de la couronne **64** s'en trouve simplifiée, le manchon **68** et la jupe **70** pouvant être directement dans le prolongement l'un de l'autre.

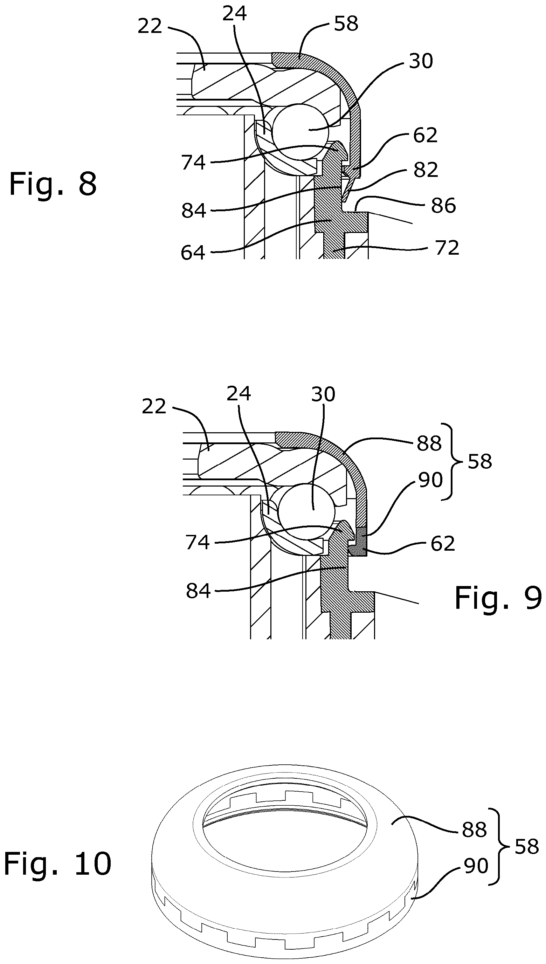

Dans les modes de réalisation précédents, un chicanage a été prévu entre la zone d'encliquetage **62** et la zone complémentaire d'encliquetage **74** pour protéger le roulement contre les polluants extérieurs sans générer de couple de frottement. Si l'environnement est très agressif, on peut toutefois prévoir une protection par joint d'étanchéité. Sur la figure **8** a été illustré un détail d'un autre mode de réalisation de l'invention, dans lequel la zone d'encliquetage **62** se prolonge par une lèvre d'étanchéité **82** qui, après encliquetage, vient en contact radial sur une portée cylindrique **84** formée sur la couronne d'assemblage **64**, sous la zone complémentaire d'encliquetage **74**. Le couvercle **58** est réalisé d'une pièce en un matériau présentant un faible coefficient de frottement et très bonne résistance à l'abrasion, par exemple un thermoplastique tel que le polyoxyméthylène (POM). La couronne d'assemblage **64** est de préférence en un matériau thermoplastique, par exemple un polyamide, en particulier un PA6 ou PA66. On minimise ainsi le couple généré lors de la rotation de la butée de suspension **18.**

Le cas échéant, et suivant une variante non illustrée, la zone d'encliquetage **62** protubérante peut venir en contact avec la portée cylindrique **84**, soit en remplacement de la lèvre **82**, soit en supplément. Suivant une autre variante, le contact entre la lèvre d'étanchéité **82** et la couronne d'assemblage **64** n'est pas radial, mais axial, la lèvre d'étanchéité venant reposer sur une portée annulaire plane **86** de la couronne d'assemblage **64**.

Suivant la variante illustrée sur les figures **9** et **10**, le couvercle **58** est constitué d'une portion d'appui **88** incluant la zone de contact avec le palier **20** et d'une portion annulaire d'encliquetage **90**, surmoulée sur la portion d'appui **88** et formant la zone d'encliquetage **62.** On peut alors choisir deux matériaux différents pour les deux portions constitutives du couvercle, par exemple un thermoplastique, le cas échéant chargé de fibres de verre, pour la portion d'appui **88** et un élastomère thermoplastique (TPE), notamment un polyuréthane élastomère (TPU) pour la portion annulaire d'encliquetage **90**, qui peut alors avantageusement former une lèvre d'étanchéité venant, en position nominale, en contact périphérique avec une portée cylindrique **84** formée sur la couronne d'assemblage **64.** Comme précédemment, la couronne d'assemblage **64** est de préférence en un matériau thermoplastique, par exemple un polyamide, en particulier un PA6 ou PA66, pour minimiser le couple résistant lors des rotations de la butée de suspension. L'interface entre la portion annulaire d'encliquetage **90** et la portion **88** est de préférence en créneau pour en maximiser la surface de contact et ainsi constituer un verrouillage de forme.

L'ajout d'une lèvre d'étanchéité du type proposé sur la figure **8** ou d'un contact entre la portion d'encliquetage et portée cylindrique du type proposé sur les figures **9** et **10**, est transposable au mode de réalisation de la figure **7****.** La lèvre d'étanchéité est alors formée sur la couronne d'assemblage **64**, alors que la portée cylindrique servant d'appui pour la lèvre d'étanchéité est située sur le couvercle **58**, au-dessus de la zone d'encliquetage **62**.

D'autres variantes sont naturellement possibles. Il est notamment possible de prévoir un insert, notamment un insert métallique, de renfort de la coupelle.

La zone d'encliquetage **62** peut être discontinue et composée de plusieurs secteurs angulaires faisant saillie radialement vers l'intérieur.

Les nervures de renfort **40** situées radialement à l'extérieur de la zone de contact **38** sur la face supérieure **36** de la coupelle **34** peuvent constituer un réseau en nids d'abeille.

## Revendications

1. Butée de suspension (18), pour une jambe de suspension (10) comportant un ressort à boudin (14), la butée de suspension (18) définissant un axe géométrique de référence (100) et comportant:
- un palier (20);
- un couvercle (58), présentant une face inférieure comportant une zone de contact avec le palier (20), le couvercle (58) présentant au moins une zone d'encliquetage (62);
- une coupelle monobloc inférieure en matière plastique ou composite moulée (34), présentant une face supérieure (36) délimitant avec la face inférieure du couvercle (58) un logement (59) pour le palier (20), et une face inférieure (42) comportant une zone annulaire périphérique d'appui (47) pour une extrémité supérieure du ressort à boudin (14), la zone annulaire périphérique d'appui (47) étant située radialement à l'extérieur de la zone d'encliquetage (62);
**caractérisée en ce que** la butée de suspension (18) comporte en outre une couronne d'assemblage (64) solidaire de la coupelle monobloc (34) et comportant au moins une zone complémentaire d'encliquetage (74) faisant saillie radialement vers la zone d'encliquetage (62) du couvercle, de sorte à venir s'encliqueter sur la zone d'encliquetage (62) du couvercle.

2. Butée de suspension (18) selon la revendication 1, **caractérisée en ce que** la zone d'encliquetage (62) est annulaire.

3. Butée de suspension (18) selon l'une quelconque des revendications précédentes, **caractérisée en ce que** la zone complémentaire d'encliquetage (74) est annulaire.

4. Butée de suspension (18) selon l'une quelconque des revendications précédentes, **caractérisée en ce que** dans une position nominale de fonctionnement, la zone d'encliquetage (62) est sans contact avec la zone complémentaire d'encliquetage (74), un chicanage étant réalisé entre la zone d'encliquetage (62) et la zone complémentaire d'encliquetage (74).

5. Butée de suspension (18) selon l'une quelconque des revendications 1 à 3, **caractérisée en ce que** le couvercle (58) comporte un joint d'étanchéité annulaire (62, 82) en contact glissant avec une portée annulaire (84, 86), de préférence cylindrique ou tronconique, formée sur la couronne d'assemblage (64), de préférence sous la zone complémentaire d'encliquetage (74).

6. Butée de suspension (18) selon l'une quelconque des revendications précédentes, **caractérisée en ce que** le couvercle (58) est monobloc ou constitué d'une première portion (88) en une première matière constituant la zone de contact avec le palier (20) et d'une deuxième portion annulaire (90) en une deuxième matière différant de la première matière, formant la zone d'encliquetage (62), et/ou le cas échéant le joint d'étanchéité (62, 82).

7. Butée de suspension (18) selon l'une quelconque des revendications précédentes, **caractérisée en ce que** la couronne d'assemblage (64) comporte une base (73) surmoulée dans la matière plastique moulée de la coupelle monobloc inférieure (34).

8. Butée de suspension (18) selon l'une quelconque des revendications 1 à 6, **caractérisée en ce que** la couronne d'assemblage (64) comporte au moins une zone d'accrochage inférieure élastiquement déformable encliquetée dans au moins une zone d'accrochage complémentaire de la coupelle inférieure.

9. Butée de suspension (18) selon l'une quelconque des revendications précédentes, **caractérisée en ce que** la coupelle inférieure comporte une zone de contact (38) avec le palier (58), présentant de préférence des nervures (39).

10. Butée de suspension (18) selon l'une quelconque des revendications précédentes, **caractérisée en ce que** la couronne d'assemblage n'est pas en contact avec le palier (58).

11. Butée de suspension (18) selon l'une quelconque des revendications précédentes, **caractérisée en ce que** le palier (58) est situé radialement à l'intérieur de la zone d'encliquetage.

12. Butée de suspension (18) selon l'une quelconque des revendications précédentes, **caractérisée en ce que** la zone complémentaire d'encliquetage (74) fait saillie radialement vers l'extérieur et la zone d'encliquetage (62) fait saillie radialement vers l'intérieur.

13. Butée de suspension (18) selon l'une quelconque des revendications 1 à 11, **caractérisée en ce que** la zone complémentaire d'encliquetage (74) fait saillie radialement vers l'intérieur et la zone d'encliquetage (62) fait saillie radialement vers l'extérieur.

14. Butée de suspension (18) selon l'une quelconque des revendications précédentes, **caractérisée en ce que** le palier (58) comporte au moins une rondelle supérieure (22) et une rondelle inférieure (24) tournant l'une par rapport à l'autre.

15. Butée de suspension selon la revendication 14, **caractérisée en ce que** la rondelle supérieure (22) forme une portée annulaire plane d'appui (32) pour un amortisseur télescopique (12) de la jambe de suspension (10), la portée annulaire plane d'appui (32) s'étendant radialement vers l'intérieur par rapport à la rondelle inférieure.

16. Jambe de suspension (10) comportant un ressort à boudin (14), **caractérisé en ce qu'**elle comporte une butée de suspension (18) selon l'une quelconque des revendications précédentes, le ressort à boudin (14) présentant une extrémité supérieure en appui contre la zone d'appui (47).

17. Jambe de suspension (10) selon la revendication 16, comportant en outre un tampon de choc (16) présentant une extrémité supérieure logée dans une zone de logement (50) formée par un épaulement annulaire plan ou tronconique (52) et par une face de confinement (54) de la coupelle (34).

18. Jambe de suspension (10) selon la revendication 16 ou la revendication 17, la butée de suspension (18) étant selon la revendication 15, la jambe de suspension (10) comportant en outre un amortisseur télescopique (12) traversant la butée de suspension (18) et en appui contre la portée annulaire d'appui (32) formée par la rondelle supérieure (22).

## Patentansprüche

1. Anschlagpuffer (18) für ein Federbein (10), das eine Spiralfeder (14) umfasst, wobei der Anschlagpuffer (18) eine geometrische Bezugsachse (100) abgrenzt, und folgendes umfasst:
- ein Lager(20)
- einen Deckel (58), an dessen Unterseite ein Bereich mit dem Lager (20) in Berührung kommt, wobei der Deckel (58) mindestens einen Rastbereich (62) aufweist;
- eine untere Monoblockschale aus geformtem Kunststoff oder Verbundstoff (34), deren Oberseite (36) zusammen mit der Unterseite des Deckels (58) eine Aufnahme (59) für das Lager (20) abgrenzt, und deren Unterseite (42) einen ringförmigen umlaufenden Stützbereich (47) für ein oberes Ende der Spiralfeder (14) umfasst, wobei sich der ringförmige umlaufende Stützbereich (47) radial außerhalb des Rastbereichs (62) befindet;
- **dadurch gekennzeichnet, dass** der Anschlagpuffer (18) des Weiteren einen Montagekranz (64) umfasst, der mit der Monoblockschale (34) fest verbunden ist und mindestens einen ergänzenden Rastbereich (74) umfasst, der radial in Richtung des Rastbereichs (62) des Deckels vorsteht, so dass er im Rastbereich (62) des Deckels einrastet.

2. Anschlagpuffer (18) nach Anspruch 1, **dadurch gekennzeichnet, dass** der Rastbereich (62) ringförmig ist.

3. Anschlagpuffer (18) nach einem der vorhergehenden Ansprüche, **dadurch gekennzeichnet, dass** der ergänzende Rastbereich (74) ringförmig ist.

4. Anschlagpuffer (18) nach einem der vorhergehenden Ansprüche, **dadurch gekennzeichnet, dass** der Rastbereich (62) in einer nominalen Betriebsfunktion nicht mit dem ergänzenden Rastbereich (74) in Berührung kommt, wobei zwischen dem Rastbereich (62) und dem ergänzenden Rastbereich (74) eine Blende hergestellt ist.

5. Anschlagpuffer (18) nach einem der Ansprüche 1 bis 3, **dadurch gekennzeichnet, dass** der Deckel (58) einen Dichtungsring (62, 82) umfasst, der mit einem vorzugsweise zylindrischen oder kegelförmigen ringförmigen Sitz (84, 86) in Gleitkontakt kommt und auf dem Montagekranz (64) vorzugsweise unterhalb des ergänzenden Rastbereichs (74) geformt wird.

6. Anschlagpuffer (18) nach einem der vorhergehenden Ansprüche, **dadurch gekennzeichnet, dass** der Deckel (58) ein Monoblockdeckel ist oder aus einem ersten Abschnitt (88) aus einem ersten Material besteht, wobei dieser den Bereich bildet, der mit dem Lager (20) in Berührung kommt, und einem zweiten ringförmigen Abschnitt (90) aus einem zweiten sich vom ersten Material unterscheidenden Material, welcher den Rastbereich (62) und/oder gegebenenfalls die Dichtung (62, 82) bildet.

7. Anschlagpuffer (18) nach einem der vorhergehenden Ansprüche, **dadurch gekennzeichnet, dass** der Montagekranz (64) einen Sockel (73) umfasst, der im geformten Kunststoff der unteren Monoblockschale (34) aufgeformt wird.

8. Anschlagpuffer (18) nach einem der Ansprüche 1 bis 6, **dadurch gekennzeichnet, dass** der Montagekranz (64) mindestens einen unteren elastisch verformbaren Befestigungsbereich umfasst, der in mindestens einen ergänzenden Befestigungsbereich der unteren Schale einrastet.

9. Anschlagpuffer (18) nach einem der vorhergehenden Ansprüche, durch gekennzeichnet, dass die untere Schale einen Bereich (38) umfasst, der mit dem Lager (58) in Berührung kommt und vorzugsweise Rippen (39) aufweist.

10. Anschlagpuffer (18) nach einem der vorhergehenden Ansprüche, **dadurch gekennzeichnet, dass** der Montagekranz nicht mit dem Lager (58) in Berührung kommt.

11. Anschlagpuffer (18) nach einem der vorhergehenden Ansprüche, **dadurch gekennzeichnet, dass** sich das Lager (58) radial innerhalb des Rastbereichs befindet.

12. Anschlagpuffer (18) nach einem der vorhergehenden Ansprüche, **dadurch gekennzeichnet, dass** der ergänzende Rastbereich (74) radial nach außen und der Rastbereich (62) radial nach innen vorsteht.

13. Anschlagpuffer (18) nach einem der Ansprüche 1 bis 11, **dadurch gekennzeichnet, dass** der ergänzende Rastbereich (74) radial nach innen und der Rastbereich (62) radial nach außen vorsteht.

14. Anschlagpuffer (18) nach einem der vorhergehenden Ansprüche, **dadurch gekennzeichnet, dass** das Lager (58) mindestens eine obere Scheibe (22) und eine untere Scheibe (24) umfasst, die sich gegeneinander drehen.

15. Anschlagpuffer nach Anspruch 14, **dadurch gekennzeichnet, dass** die obere Scheibe (22) eine ringförmige ebene Auflagefläche (32) für einen ausziehbaren Stoßdämpfer (12) des Federbeins (10) bildet, wobei sich die ringförmige ebene Auflagefläche (32) in Bezug auf die untere Scheibe radial nach innen erstreckt.

16. Federbein (10) mit Spiralfeder (14), **dadurch gekennzeichnet, dass** es einen Anschlagpuffer (18) nach einem der vorhergehenden Ansprüche umfasst, wobei die Spiralfeder (14) ein oberes Ende aufweist, das an dem Stützbereich (47) anliegt.

17. Federbein (10) nach Anspruch 16, welches des Weiteren einen Stoßdämpfungspuffer (16) umfasst, dessen oberes Ende in einem Aufnahmebereich (50) angeordnet ist, der durch eine ringförmige ebene oder kegelförmige Schulter (52) und durch eine abschließende Fläche (54) der Schale (34) gebildet wird.

18. Federbein (10) nach Anspruch 16 oder Anspruch 17, wobei der Anschlagpuffer (18) mit Anspruch 15 übereinstimmt, wobei das Federbein (10) des Weiteren einen ausziehbaren Stoßdämpfer (12) umfasst, der durch den Anschlagpuffer (18) hindurch führt und an der ringförmigen Auflagefläche (32), die durch die obere Scheibe (22) gebildet wird, anliegt.

## Claims

1. A suspension stop (18), for a suspension strut (10) comprising a coil spring (14), the suspension stop (18) defining a reference geometric axis (100) and comprising:
- a bearing (20);
- a cover (58), having a bottom face comprising a zone of contact with the bearing (20), the cover (58) having at least one snapping-on zone (62);
- a bottom single-piece cup made from moulded plastics or composite material (34), having a top face (36) delimiting, with the bottom face of the cover (58), a housing (59) for the bearing (20), and a bottom face (42) comprising a peripheral annular support zone (47) for a top end of the coil spring (14), the peripheral annular support zone (47) being situated radially outside the snapping-on zone (62);
**characterised in that** the suspension stop (18) further comprises an assembly ring (64) secured to the single-piece cup (34) and comprising at least one complementary snapping-on zone (74) projecting radially towards the snapping-on zone (62) of the cover, so as to snap onto the snapping-on zone (62) of the cover.

2. The suspension stop (18) according to claim 1, **characterised in that** the snapping-on zone (62) is annular.

3. The suspension stop (18) according to either of the preceding claims, **characterised in that** the complementary snapping-on zone (74) is annular.

4. The suspension stop (18) according to any of the preceding claims, **characterised in that**, in a nominal operating position, the snapping-on zone (62) has no contact with the complementary snapping-on zone (74), a zig-zag being produced between the snapping-on zone (62) and the complementary snapping-on zone (74).

5. The suspension stop (18) according to any of claims 1 to 3, **characterised in that** the cover (58) comprises an annular seal (62, 82) in sliding contact with an annular surface (84, 86), preferably cylindrical or frustoconical, formed on the assembly ring (64), preferably under the complementary snapping-on zone (74) .

6. The suspension stop (18) according to any of the preceding claims, **characterised in that** the cover (58) is in a single piece or consists of a first portion (88) made from a first material constituting the zone of contact with the bearing (24) and a second annular portion (90) made from a second material different from the first material, forming the snapping-on zone (62), and/or where applicable the seal (62, 82).

7. The suspension stop (18) according to any of the preceding claims, **characterised in that** the assembly ring (64) comprises a base (73) moulded on in the moulded plastics material of the bottom single-piece cup (34) .

8. The suspension stop (18) according to any of claims 1 to 6, **characterised in that** the assembly ring (64) comprises at least one elastically deformable bottom attachment zone snapped on in at least one complementary attachment zone of the bottom cup.

9. The suspension stop (18) according to any of the preceding claims, **characterised in that** the bottom cup comprises a zone (38) of contact with the bearing (58), preferably having ribs (39).

10. The suspension stop (18) according to any of the preceding claims, **characterised in that** the assembly ring is not in contact with the bearing (58).

11. The suspension stop (18) according to any of the preceding claims, **characterised in that** the bearing (58) is situated radially inside the snapping-on zone.

12. The suspension stop (18) according to any of the preceding claims, **characterised in that** the complementary snapping-on zone (74) projects radially outwards and the snapping-on zone (62) projects radially inwards.

13. The suspension stop (18) according to any of claims 1 to 11, **characterised in that** the complementary snapping-on zone (74) projects radially inwards and the snapping-on zone (62) projects radially outwards.

14. The suspension stop (18) according to any of the preceding claims, **characterised in that** the bearing (58) comprises at least one top washer (22) and one bottom washer (24) rotating one with respect to the other.

15. The suspension stop according to claim 14, **characterised in that** the top washer (22) forms a planar annular support surface (32) for a telescopic damper (12) of the suspension structure (10), the planar annular support surface (32) extending radially inwards with respect to the bottom washer.

16. A suspension strut (10) comprising a coil spring (14), **characterised in that** it comprises a suspension stop (18) according to any of the preceding claims, the coil spring (14) having a top end in abutment against the support zone (47).

17. The suspension strut (10) according to claim 16, further comprising a shock pad (16) having a top end housed in a housing zone (50) formed by a planar or frustoconical annular shoulder (52) and by a confinement face (54) of the cup (34).

18. The suspension structure (10) according to claim 16 or claim 17, the suspension stop (18) being in accordance with claim 15, the suspension structure (10) further comprising a telescope damper (12) passing through the suspension stop (18) and in abutment against the annular support surface (32) formed by the top washer (22).
